# EUROPÄISCHE PATENTSCHRIFT

(11) **EP 0 885 123 B1**
(45) Veröffentlichungstag und Bekanntmachung des Hinweises auf die Patenterteilung: **06.03.2002**
(21) Anmeldenummer: 96928438.9
(22) Anmeldetag: 09.08.1996
(51) Int. Cl.: B32B 31/08

(54) **VORRICHTUNG UND VERFAHREN ZUM BESCHICHTEN VON METALLBAHNEN**
DEVICE AND PROCESS FOR THE COATING OF METAL STRIPS
DISPOSITIF ET PROCEDE PERMETTANT DE RECOUVRIR DES BANDES DE METAL

(30) Priorität: 11.08.1995 DE 19529583
(43) Veröffentlichungstag der Anmeldung: 23.12.1998
(73) Patentinhaber: BASF Coatings Aktiengesellschaft, 48165 Münster (DE)
(72) Erfinder: KIRIAZIS, Leonidas, D-48151 Münster (DE)
(74) Vertreter: Fitzner, Uwe, Dr.
(86) Internationale Anmeldenummer: EP9603525
(87) Internationale Veröffentlichungsnummer: WO9706955

(56) Entgegenhaltungen:
- EP-A- 0 312 309
- WO-A-86/01772
- US-A- 5 234 516
- PATENT ABSTRACTS OF JAPAN vol. 015, no. 253 (M-1129), 27.Juni 1991 & JP,A,03 083635 (MITSUBISHI PLASTICS IND LTD), 9.April 1991,
- DATABASE WPI Section Ch, Week 8708 Derwent Publications Ltd., London, GB; Class A32, AN 87-054570 XP002019412 & JP,A,62 011 645 (KAWATETSU KOHAN KK) , 20.Januar 1987

## Beschreibung

Die Erfindung betrifft eine Vorrichtung zum Beschüchten von Metallbahnen gemäß dem Oberbegriff des Patentanspruchs 1 und ein Verfahren zum beschichten von Metallbahnen mit Kunststoffolien.

Eine Vorrichtung und ein Verfahren dieser Art ist beispielweise aus der EP-A-0 312 309 bekannt.

Die Beschichtung von Metallflächen mit Kunststoffen findet zahlreiche Anwendungen für verschiedene Produkte wie z.B. Elektrogeräte oder Verpackungen. Beispielsweise werden in der Lebensmittelindustrie Nahrungsmittel in Behältern (Dosen) verpackt, wobei der Metallkörper die Stabilität des Verpackungsgefäßes garantiert und die Kunststoffbeschichtung das Metall lebensmittelverträglich von den Nahrungsmitteln trennt. Eine zusätzlich an den Außenflächen von Metallbehältern aufgebrachte Folie kann darüber hinaus durch Bedrucken Informationen und Werbung aufnehmen.

Bei diesen Anwendungen tritt naturgemäß das Problem auf, die Kunststoffbeschichtung mit einer ausreichenden Haftfestigkeit auf das Metallsubstrat aufzubringen. Hierfür wurden nach dem Stand der Technik bereits mehrere Verfahrensvarianten entwickelt. Besondere Bedeutung haben dabei die Verfahren, bei denen eine vorbereitete Kunststoffolie großflächig auf das Metall aufgebracht und mit diesem verbunden wird. Für ein Haften des Kunststoffes an dem Metall sind dabei grundsätzliche Adhäsionskräfte verantwortlich. Eine ausreichende Adhäsion wird dabei insbesondere durch eine zwischengeschaltete Klebeschicht oder durch ein Aufschmelzen der Kunststoffolie auf das Metall erreicht.

In der EP-0 312 309 wird z.B. ein Verfahren zur Beschichtung von Metallfolien mit Polypropylen beschrieben. Dieses ist dadurch charakterisiert, daß die Polypropylenfolie durch Schmelzen mit dem Metall verbunden wird, und daß nach dem Schmelzvorgang ein rasches und gleichmäßiges Abkühlen erfolgt. Hierdurch wird der Kristallisationsvorgang im Polypropylen beeinflußt. Allerdings gibt es bei diesem Verfahren keine Möglichkeit, die Oberflächenstruktur des Laminates in eine gewünschte Richtung zu steuern. Dies ist sehr nachteilig, da Art und Aussehen der Oberfläche wichtige Produkteigenschaften darstellen.

Bei der Beschichtung von Metallen mit unpolaren Substraten wie z.B. Polypropylen ist zusätzlich eine Oberflächenbehandlung von Vorteil. Zu geeigneten derartigen Behandlungen gehören Reinigungsprozesse, die störende Substanzen von der Folie entfernen, sowie mechanische Vorbehandlungen wie z.B. Aufrauhen oder chemische Aktivierung. Bei einer Beschichtung mit Polyolefinen kommt insbesondere auch ein Beflammen der Folie zur Anwendung. Eine chemische Aktivierung von Polypropylenschmelzfilmen kann durch eine Behandlung mit Ozon erfolgen.

Eine gute Steuerung der Haftverstärkung und einen guten Aktivierungseffekt bietet auch eine Vorbehandlung mit der sog. Coronaentladung. Hierbei kommt es in einem über der Folie erzeugten inhomogenen Hochspannungswechselfeld zu spontanen Gasentladungen. Es wird vermutet, daß hierbei Stoffe wie z.B. Peroxide erzeugt werden, die dann zu einer chemischen Aktivierung der Kunststoffoberfläche führen. Allerdings bleibt eine wirkungsvolle Beschichtung der Metallbahnen mit Kunststoffolie technisch problematisch. So kommt es bei dünnen polyolefinischen Folien häufig zu Blockierungen während der Coronavorbehandlung. Ferner erzeugt die Coronavorbehandlung eine haftungsverbessernde Grenzflächenspannung, die jedoch im Laufe der Zeit (Tage oder Wochen) herabgesetzt wird und dann, nach Aufbringen der Folie auf die Metallbahn, zu Haftungsproblemen führen kann.

Aus der WO-A-86/01772 sind Laminate bekannt, die aus Metallbahnen und mehreren Lackschichten bestehen bekannt. Die Lackschichten sind dabei für die anschließende Prägung durch Strukturwalzen Voraussetzung, Ein Druckwerk mit vorgeschalteter Coronavorbehandlung ist nicht vorgesehen, so daß eine individuellere Ausgestaltung der fertigen Laminate nicht möglich ist.
Die US-A-5,234,516 beschreibt die Bearbeitung von Metallbahnen mit chromhaltigen Beschichtungen. Der Beschichtungsprozeß gemäß der US-A-5,234,516 wird durch eine aufwendige radioaktive Bestrahlung abgeschlossen. Ebenso ist auch hier eine individuellere Ausgestaltung nicht vorgesehen, da auch hier Druckwerk mit vorgeschalteter Coronavorbehandlung fehlen.

Die Erfindung hat sich die Aufgabe gestellt, eine verbesserte Vorrichtung und ein verbessertes Verfahren zum Auflaminieren von Kunststoffolien auf Metallbahnen zur Verfügung zu stellen, wobei insbesondere verbesserte Haftungswerte erzielt werden und die Oberflächenstruktur gesteuert werden kann.

Diese Aufgabe wird gelöst durch eine Vorrichtung zum Beschichten von Metallbahnen, bestehend aus einer Zuführung für die Metallbahn (2), einem Ofen (3) zur Vorerhitzung der Metallbahn, mindestens einer Zufuhreinheit (4) mit Laminierwalzen (10) für aufzulaminierende Folie (5), ggf. einem weiteren nachgeschalteten Ofen (6) zum gemeinsamen Erhitzen von Metallbahn und aufliegender Folie, mindestens zwei nachgeordneten Struktur- oder Glättwalzen (7), die im Unterschied zum genannten Stand der Technik dadurch gekennzeichnet ist, daß sie mit einem Druckwerk (8) und davor einer Vorrichtung (9) zur vorgeschalteten Coronabehandlung der Folie (5) zwecks Verbesserung der Bedruckbarkeit der Folie auf der Metallbahn ausgerüstet ist.

Durch diese Anordnung kann erreicht werden, daß die Folie mit einerseits mit sehr guten Haftwerten aufgebracht wird, andererseits durch die nachgeschalteten Struktur- oder Glättwalzen die Art der Oberfläche gesteuert werden kann. Durch das Andrücken der Beschichtungsfolie auf das Metall mit einer Glättwalze wird eine gleichmäßig glatte Oberfläche erzeugt. Produkte mit glatten oder glänzenden Oberflächen finden besonders Verwendung für sog. "weiße Ware", d.h in erster Linie Haushaltsgeräte. Andere Anwendungsgebiete wie z.B. in der Phonoindustrie erfordern dagegen eine matte oder strukturierte Oberfläche. Hierbei kann anstelle der Glättwalze eine Strukturwalze verwendet werden. Als vorteilhaft erweist es sich dabei, vor diesen Walzen einen weiteren Ofen anzuordnen, in dem die Metallbahn und die aufliegende Folie erwärmt werden, so daß der Kunststoff plastisch verformbar wird. Auch die Walzen selbst können temperierbar sein.
Das am Ende der Bearbeitungsstrecke stehende Druckwerk bietet die Möglichkeit, die Kunststoffoberfläche zur Farbgebung, für Informations- und Werbezwecke zu bedrucken.

In einer weiteren Ausgestaltung der Erfindung enthält diese zusätzlich eine Vorrichtung zur Vorbehandlung der Folie, um somit eine verbesserte Haftfähigkeit auf der Metallbahn zu erzeugen. Insbesondere kann diese Vorrichtung unmittelbar vor den Laminierwalzen angeordnet sein.

Diese Vorrichtung zur Verbesserung der Hafteigenschaften ist eine Coronaentladungseinheit.

Durch die Anordnung der Coronavorbehandlung unmittelbar vor der Laminierung wird die Gefahr, daß dünne polyolefinische Folien blocken, erheblich herabgesetzt Die Produktion kann damit ungestörter und somit wirtschaftlich effektiver verlaufen. Ferner werden hierdurch Probleme mit Folien vermieden, die zur Verbesserung ihrer Hafteigenschaften bereits nach ihrer Herstellung Corona-behandelt worden sind. Die hierdurch erzeugte Grenzflächenspannung nimmt nämlich im Laufe der Zeit ab, so daß zum Zeitpunkt des Auflaminierens der Folien die Hafteigenschaften nicht mehr optimal sind. Durch Lagerung oder Transport kann die Verarbeitung oftmals erst einige Wochen nach der Herstellung der Folie erfolgen. Geeignete Werte der Grenzflächenspannung liegen im Bereich von 38-45 mN/m. Diese Werte werden mit der erfindungsgemäßen Coronavorbehandlung wieder aufgefrischt. Es lassen sich daher nach Coronavorbehandlung von Polypropylenfolien ausgezeichnete Haftungswerte auf Metall erzielen. Gleiches gilt auch für die Coexfolien wie Maleinsäureanhydrid gepropftes Polypropylen/ Polypropylen (MSA-g-PP/PP).

Vor dem Druckwerk ist eine weitere Coronabehandlung angeordnet Denn das Bedrucken von mit Polypropylen beschichteten Metallen begegnet i.a. großen Schwierigkeiten. Mit dem erfindungsgemäßen Verfahren wird jedoch einerseits noch vorhandene Wärme des frisch laminierten Metalls ausgenutzt, andererseits wird mittels der Coronabehandlung eine bessere Haftung der aufgetragenen Farbe erreicht.

Die Erfindung betrifft auch ein Verfahren zur Herstellung von mit Folien beschichteten Metallbahnen in einer Vorrichtung nach Anspruch 1, das dadurch gekennzeichnet ist, daß
a) die Metallbahn (2) aus einer Zuführvorrichtung (4) in einen Ofen (3) geführt und dort erhitzt wird,
b) anschließend über die Laminierwalzen (10) eine, zur Verbesserung der Haftfähigkeit auf der Metallbahn durch Coronaentladung, an den Laminierwalzen (10) vorgelagerten Vorrichtungen (9) vorbehandelte, Folie (5) über die Metallbahn (2) gelegt wird,
c) ggf. in einen weiteren Ofen geleitet und dort erhitzt,
d) ggf. anschließend gekühlt wird, vorzugsweise auf unter 10°C, besonders bevorzugt auf unter 7°C,
e) das Laminat mittels Struktur- oder Glättwalzen (7) bearbeitet wird,
f) das Laminat mit der Vorrichtung (9) zwecks Verbesserung der Bedruckbarkeit der Folie durch Coronaentladung vorbehandelt wird, und
g) das Laminat über das Druckwerk (8) geführt wird.

Zweckmäßige Weiterbildungen der Erfindung sind Gegenstand der abhängigen Ansprüche.

Durch das erfindungsgemäße Beschichtungsverfahren wird ein Produkt mit sehr guter Haftfähigkeit erzielt. Durch die Anordnung der Erwärmungs- bzw. Erhitzungsschritte erfolgt ein Anschmelzen der Folie, was zu einer verstärkten Adhäsionswirkung führt. Insbesondere wird durch die Behandlung mit der Coronaentladung unmittelbar vor der Auflaminierung eine Verbesserung der Haftung erzielt.

Für die dem zweiten Ofen ggf. nachgeschaltete Kühlung besteht die Möglichkeit, diese mit Hilfe eines Wasserbades, durch Aufsprühen von Wasser oder durch Zufuhr von Luft durchzuführen. Vorzugsweise wird auf Temperaturen von unter 10°C, insbesondere unter 7°C abgekühlt. Vor der Eingabe der Folie in das Druckwerk findet nach dem erfindungsgemäßen Verfahren eine weitere Behandlung mittels Coronaentladung statt. Diese sollte unmittelbar vor dem Bedrucken stattfinden, um bessere Druckergebnisse zu erzielen.

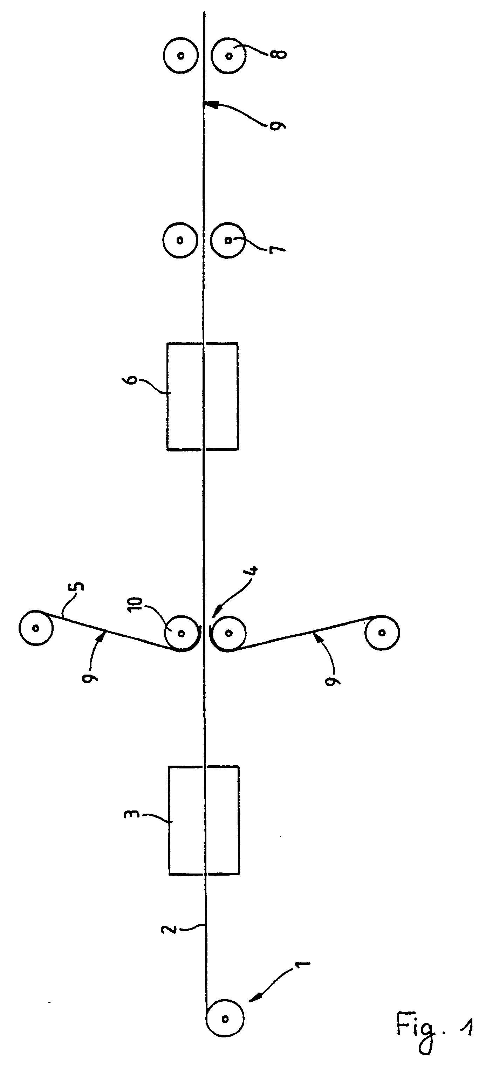

Eine bevorzugte Verwendung findet die erfindungsgemäße Vorrichtung und das erfindungsgemäße Verfahren bei der Auflaminierung von Kunststoffolien auf Metalle, insbesondere von Polypropylenfolien. Ferner können Kunststoffe verwendet werden, die Füllstoffe enthalten, z.B. anorganische Füllstoffe wie metallische Pulver.
Im folgenden wird die Erfindung anhand des Beispiels und der Abbildung beschrieben.
Die zu beschichtende Metallbahn 2 wird von Coilhaspeln 1 entnommen und über eine Zuführeinheit der Beschichtungsanlage zugeführt. Die Zuführeinheit kann dabei weitere Elemente, z.B. Spannrollen, enthalten. Gegebenenfalls kann auch eine Lackiereinheit vorgesehen sein. Die Metallbahn 2 wird sodann durch einen Ofen 3 geführt und dort erwärmt Dabei kann es sich um einen Umluftofen oder einen Induktionsofen handeln. Die Metallbahn 2 wird dann zwischen zwei Laminierwalzen 10 hindurchgeführt und über die auch das Anpressen und Auflegen der Folie 5 erfolgt. Dies kann von beiden Seiten der Metallbahn oder auch nur von einer Seite aus geschehen. Die Folie wird ebenfalls auf Rollen bevorratet und über ein Zuführsystem dem Laminiervorgang zugeleitet. Dabei ist es möglich, ebenfalls über einen Umluftofen oder eine IR-Lampe eine Vorerwärmung der Folien durchzuführen. Erfindungsgemäß bevorzugt ist die Anordnung einer Coronastation 9 unmittelbar vor den Laminierwalzen. Durch die im Hochspannungswechselfeld erzeugten Gasentladungen kommt es zu einer Erwärmung und einer chemischen Aktivierung der Folienoberfläche. Hierdurch wird beim anschließenden Kaschieren der Folie auf die Metallbahn eine verbesserte Haftungswirkung erzielt Die Metallbahn zusammen mit der nun aufliegenden Folie wird schließlich ggf. einem weiteren Ofen 6 zugeführt. Durch die nochmalige Erwärmung kommt es zu einem Anschmelzen des Kunststoffes und damit zu einer besseren Adhäsion am Metall. Zudem wird die Kunststoffolie plastisch, was die Bearbeitung durch die anschließenden Glätt- oder auch Strukturwalzen 7 erleichtert. Im Anschluß an den Glätt- bzw. Strukturprägungsvorgang kann eine Kühlung der beschichteten Metallbahn vorgenommen werden. Ebenso können Trocknungswalzen oder ein Trocknungsofen vorgesehen werden. Mit dem Druckwerk 8 wird die Folienbeschichtung schließlich mit Farbe bedruckt. Hierbei ist zur Verbesserung des Druckergebnisses vor dem Druckwerk eine weitere Coronastation 9 angeordnet. Im Anschluß an das Druckwerk 8 können weitere übliche Bearbeitungsstationen angeordnet sein, so z.B. eine optische Überprüfungseinheit zur Qualitätskontrolle, eine Scheideeinheit für Spulen oder Tafeln, oder ein Stanzwerk, z.B. für die Herstellung von Konservendosen.
Die erfindungsgemäße Vorrichtung zum Beschichten von Metallbahnen mit Kunststoffolie liefert überraschend gute Haftungsergebnisse. Ferner ist hiermit in einem kompakten sequentiellen Verfahren die Auflaminierung von Folie, das Glätten der Oberfläche bzw. Aufbringen von Struktur sowie ein Bedrucken der Oberfläche möglich.

## Patentansprüche

1. Vorrichtung zum Beschichten von Metallbahnen, bestehend aus einer Zuführung für die Metallbahn (2), einem Ofen (3) zur Vorerhitzung der Metallbahn, mindestens einer Zufuhreinheit (4) mit Laminierwalzen (10) für aufzulaminierende Folie (5), ggf. einem weiteren nachgeschalteten Ofen (6) zum gemeinsamen Erhitzen von Metallbahn und aufliegender Folie, mindestens zwei nachgeordneten Struktur- oder Glättwalzen (7),
**dadurch gekennzeichnet, daß** sie mit einem Druckwerk (8) und davor einer Vorrichtung (9) zur vorgeschalteten Coronabehandlung der Folie (5) zwecks Verbesserung der Bedruckbarkeit der Folie auf der Metallbahn ausgerüstet ist.

2. Verfahren zur Herstellung von mit Folien beschichteten Metallbahnen in einer Vorrichtung nach Anspruch 1, bei dem
a) die Metallbahn (2) aus einer Zuführvorrichtung (4) in einen Ofen (3) geführt und dort erhitzt wird,
b) anschließend über die Laminierwalzen (10) eine, zur Verbesserung der Haftfähigkeit auf der Metallbahn durch Coronaentladung, an den Laminierwalzen (10) vorgelagerten Vorrichtungen (9) vorbehandelte, Folie (5) über die Metallbahn (2) gelegt wird,
c) ggf. in einen weiteren Ofen geleitet und dort erhitzt,
d) ggf. anschließend gekühlt wird, vorzugsweise auf unter 10°C, besonders bevorzugt auf unter 7°C,
e) das Laminat mittels Struktur- oder Glättwalzen (7) bearbeitet wird,
f) das Laminat mit der Vorrichtung (9) zwecks Verbesserung der Bedruckbarkeit der Folie durch Coronaentladung vorbehandelt wird, und
g) das Laminat über das Druckwerk (8) geführt wird.

3. Verfahren nach Anspruch 2,
**dadurch gekennzeichnet, daß** die Kühlung mittels eines Wasserbades, mittels Aufsprühens von Wasser oder mittels Zufuhr von Luft durchgeführt wird.

4. Verfahren nach einem der Ansprüche 2 oder 3,
**dadurch gekennzeichnet, daß** die Folie (5) eine Polyethylenfolie ist.

## Claims

1. An apparatus for coating metal sheets, consisting of a feed for the metal sheet (2), an oven (3) for preheating the metal sheet, at least one feeding unit (4) with laminating rolls (10) for film (5) that is to be applied by lamination, optionally a further downstream oven (6) for the conjoint heating of metal sheet and film atop it, at least two downstream texturing or smoothing rolls (7), which apparatus is equipped with a printing mechanism (8) and, upstream thereof, an apparatus (9) for the upstream corona treatment of the film (5) in order to improve the printability of the film on the metal sheet.

2. A process for producing metal sheets, coated with films, in an apparatus as claimed in claim 1, in which
a) the metal sheet (2) is guided from a feed apparatus into an oven (3) in which it is heated,
b) a film (5), pretreated by corona discharge on apparatuses (9) arranged before the laminating rolls (10), in order to improve the adhesiveness on the metal sheet, is subsequently placed over the metal sheet (2) by way of the laminating rolls(10),
c) the metal sheet and film is optionally passed into a further oven in which it is heated,
d) cooling is then optionally carried out, preferably to below 10°C, with particular preference to below 7°C,
e) the laminate is processed by means of texturing or smoothing rolls (7),
f) the laminate is pretreated by corona discharge using the apparatus (9) in order to improve the printability of the film, and
g) the laminate is optionally guided over the printing mechanism (8).

3. The process as claimed in claim 2, wherein cooling is carried out by means of a waterbath, by spraying on water or by supplying air.

4. The process as claimed in claim 2 or 3, wherein the film (5) is a polyethylene film.

## Revendications

1. Dispositif de revêtement de bandes métalliques, se composant d'une arrivée pour la bande métallique (2), d'un four (3) pour le préchauffage de la bande métallique, d'au moins une unité d'alimentation (4) avec des cylindres de contrecollage (10) pour le film à contrecoller (5), le cas échéant avec un four supplémentaire disposé à la suite (6) pour le chauffage commun de la bande métallique et du film appliqué, d'au moins deux cylindres structurés ou lisses disposés à la suite (7), **caractérisé en ce qu'**il est équipé d'un groupe d'impression (8) et avant celui-ci d'un dispositif (9) pour le prétraitement préalable du film (5) par une décharge corona en vue d'améliorer l'aptitude à l'impression du film sur la bande métallique.

2. Procédé pour la fabrication de bandes métalliques revêtues de films, dans un dispositif suivant la revendication 1, dans lequel.
a) la bande métallique (2) est conduite depuis un dispositif d'alimentation (4) dans un four (3) et elle y est chauffée,
b) ensuite, un film (5), prétraité par une décharge corona dans des dispositifs (9) précédant les cylindres de contrecollage (10) en vue d'améliorer l'adhérence sur la bande métallique, est déposé sur la bande métallique (2) par les cylindres de contrecollage (10),
c) le cas échéant est conduite dans un autre four et y est chauffé,
d) le cas échéant est ensuite refroidie, de préférence en dessous de 10°C, en particulier de préférence en dessous de 7°C,
e) le stratifié est traité au moyen de cylindres structurés ou lisses (7),
f) le stratifié est prétraité par une décharge corona avec le dispositif (9) pour améliorer l'aptitude à l'impression du film, et
g) le stratifié est conduit à travers le groupe d'impression (8).

3. Procédé suivant la revendication 2, **caractérisé en ce que** le refroidissement est effectué au moyen d'un bain aqueux, au moyen d'une aspersion d'eau ou au moyen d'un courant d'air.

4. Procédé suivant l'une des revendications 2 ou 3, **caractérisé en ce que** le film (5) est un film de polyéthylène.
